# EUROPEAN PATENT SPECIFICATION

(11) **EP 3 537 886 B1**
(45) Date of publication and mention of the grant of the patent: **23.11.2022**
(21) Application number: 17793680.4
(22) Date of filing: 08.11.2017
(51) Int. Cl.: A23J 1/00, A23J 1/14, A23L 11/30, A23L 33/185, A23K 20/147, A23K 10/30

(54) **A METHOD FOR THE MANUFACTURE OF A PROCESSED SOY PROTEIN PRODUCT**
VERFAHREN ZUR HERSTELLUNG EINES VERARBEITETEN SOJAPROTEINPRODUKTS
PROCÉDÉ DE FABRICATION D'UN PRODUIT DE PROTÉINE DE SOJA TRAITÉ

(30) Priority: 10.11.2016 EP 16198119
(43) Date of publication of application: 18.09.2019
(73) Proprietor: Hamlet Protein A/S, 8700 Horsens (DK)
(72) Inventor: ELLEGÅRD, Katrine Hvid, 8680 Ry (DK); THOMSEN, Karl Kristian, 8700 Horsens (DK); DICKOW, Jonatan Ahrens, 7140 Stouby (DK)
(74) Representative: Zacco Denmark A/S
(86) International application number: PCT/EP2017/078644
(87) International publication number: WO 2018/087168

(56) References cited:
- WO-A1-03/079806
- WO-A1-2016/029314
- AU-B2- 765 679
- US-A1- 2007 014 910
- US-A1- 2008 008 815
- US-A1- 2013 183 429

## Description

### Field of the invention

The present invention relates to a method for the manufacture of a processed solid soya protein product having a modified sugar and modified mineral profile in comparison with soya bean meal and a product manufactured by the method.

### Background of the invention

There is a need for bio-products that primarily can be used as ingredients in animal feed or food. The basic constituents in the products are proteins, fats and carbohydrates. Suitable biomasses for the products are grasses and oil bearing crops, such as seeds, cereals and pulses. One particularly interesting pulse is soya bean due to its high protein content which can be up to 45 %, based on dry matter.

The soya bean [Glycine max (L.) Merrill belongs to the family Leguminosae or Fabaceae, subfamily Faboidae] originated in Eastern Asia, see http://www.fao.org/docrep/t0532e/t0532e02.htm. Soya beans have been grown as a food crop for thousands of years in China and other countries of East and South East Asia and constitute still today an important component of the traditional popular diet in these regions. Soya beans are primarily an industrial crop, cultivated for oil and protein. It has a relatively low oil content of the seed (about 20 % on moisture-free basis), but still soya beans are a large single source of edible oil. With each ton of crude soya bean oil, approximately 4.5 tons of soya bean meal (SBM) with a protein content of about 44 % are produced. For each ton of soya beans processed, the commercial value of the meal obtained usually exceeds that of the oil.

The approximate average chemical composition of soya bean, measured on moisture-free basis, is 40 % protein; 20 % fat, mostly triglycerides and some phospholipids; 35 % carbohydrate in the form of soluble oligosaccharides (sucrose, raffinose, stachyose, verbascose) and insoluble fibre; and 5 % ash comprising the minerals, in particular potassium, calcium and magnesium. However, the mineral composition of soya beans is affected by the composition of the soil where it is cultivated.

The nutritional quality of the protein measured by its chemical score as essential amino acid composition can be found in http://www.fao.org/docrep/t0532e/t0532e02.htm. The proteins can be characterised by their solubility in various media. The solubility in water of soya bean protein is strongly affected by the pH. About 80 % of the protein in raw seeds can be extracted at neutral or alkaline pH. When acidity is increased, solubility drops rapidly and it is at a minimum in the isoelectric region of pH 4.2-4.6. This property has been used in prior art methods for the manufacture of soya bean protein products.

Some soya bean proteins, such as trypsin inhibitors, allergens and lectins, are known as anti-nutritional factors. They exert specific physiological effects. Trypsin inhibitors impair protein digestion by inactivating trypsin and are considered harmful for the nutritional value of soya bean and to be responsible for impaired growth in chickens. β-conglycinin is a soy allergen inducing intestinal inflammation and dysfunction.

A general problem related to soya bean is the high content of indigestible oligosaccharides causing flatulence when fermented in the gut. The presence of the oligosaccharides, in particular raffinose, stachyose and verbascose, can be reduced by soaking in water or enzymatically by hydrolysis with α-galactosidase. One problem associated with this is that it adds to the cost of the final product due to the use of water in soaking or by an enzymatic treatment that has traditionally been performed at a relatively high water content of 80 % or more.

US 6,238,725 B1 discloses a method for preparing a legume where the flatulence-causing oligosaccharides are removed by soaking in water. WO 2013/171259 discloses a method for the production of a solid soy-product wherein at least 80 % of the original indigestible oligosaccharides has been removed enzymatically by hydrolysis with α-galactosidase. AU 765 679 B2 discloses a leaching process for producing an isoflavone rich protein material which process includes precipitation of the protein at cool or cold temperature whereby a high amount of desired isoflavones can be recovered in the protein material. WO 03/079806 discloses a leaching process for preparation of soy protein concentrate from defatted soy flakes with improved functional properties.

When soya bean is processed into meal and oil, most of the mineral constituents, including the potassium and the magnesium, go with the soya bean meal (SBM) and few with the oil. When the soya bean is processed to a feed for e.g. chickens the content of potassium, sodium and magnesium should be reduced as much as possible in order to enhance the nutritional value of the feed and to raise the wellbeing of the chickens. The chickens drink less water when the content of potassium, sodium and magnesium is reduced in the feed, whereby the incidences of foot injuries caused by wet stools are reduced. On the other hand, it is important to keep the content of other minerals, in particular iron, zinc and calcium, high and at least as high as in the soya bean.

US2010/0068336 A1 relates to a hydration method for processing soya bean meal comprising particle size reduction of hydrated material and physical separation of "enhanced oilseed meal" from size reduced oil seed, optionally applying pH adjustment during the hydration step. The method appears to be a wet granulation. The resulting products are characterised by a protein content of about 78-84 % protein, and the moisture content appears to be low, about 3-4 %, however the mineral profile is not disclosed.

US patent 3,635,726 relates to a hydration method where soya bean material is hydrated with several additions of water at pH close to 7 followed by separation into a liquid phase and a solid protein phase. The liquid phase is pH-adjusted with acid to a pH at the isoelectric point (pH 4 to 4.8), and is then centrifuged or decanted to recover protein in a solid phase. Two or more fractions of soy bean isolate are collected and after-treated such as by drying. The resulting product are characterised by a protein content of about 73-85 % protein, however, the mineral profile is not mentioned.

US 2013/183429 A1 discloses a processed soya bean material prepared from full fat soybean with a lipid content of 25 %, and characterised by a protein content of 48-51 % protein by weight, less than 1 % potassium, and a protein : potassium-ratio of at least 50:1.

None of the prior art methods focuses on providing a solid protein product having a modified and advantageous mineral profile combined with a reduced content of oligosaccharides and at the same time a rather high content of protein. In particular, none of the methods focuses on providing products having an advantageous protein to potassium ratio and reduced content of potassium and magnesium at a minimum of costs.

The object of the present invention is to provide a method for the manufacture of processed solid soy protein product having a relatively high content of protein of high quality and at the same time a modified sugar profile and a modified mineral profile in comparison with soy bean meal (SBM) and in particular low potassium content. Another object is to provide an improved method for the production of such products, which can be performed at lower costs due to saving in the amount of acid used to adjust pH, processing at low temperatures and at low water ratios, possibly including water recirculation, and thereby saving in acid consumption, water consumption and in heat application in comparison with prior art methods.

Yet another object is to provide processed solid soy protein product having a water holding capacity adapted for specific purposes.

These objects are fulfilled with the process and the products of the present invention.

### Summary of the invention

Accordingly, the present invention relates in a first aspect to a method for the manufacture of a processed, solid soya protein product derived from soya bean meal (SBM) which protein product comprises 65-75 % protein by weight of dry matter, has a protein to potassium weight ratio of at least 50:1 and a dry matter content of at least 90 %, which product comprises less than 0.2 % sodium, such as less than 0.01 % or less than 0.005 % or less than 0.001 % by weight, and wherein at least 65 % by weight of the indigestible oligosaccharide content of the SBM wherefrom the protein is derived has been removed; the method comprises the following steps:
1) providing an initial mixture comprising milled or flaked or otherwise disintegrated soya bean meal (SBM) and water;
2) leaching the initial mixture under conditions where the dry matter amount in the initial mixture is between 8 and 20 % by weight, for 0.15 to 6 hours at a temperature of 5 to 65°C and at neutral pH;
3) separating the leaching mixture in a liquid fraction and a first solid fraction;
4) adjusting the pH of the liquid fraction from the initial leaching mixture with acid to a value of 3.5 to 5.5;
5) conveying the acidified liquid fraction through separation means such as a decanter centrifuge or similar means thereby separating the waste liquid and collecting a further solid fraction;
6) combining the solid fraction from the initial leaching mixture with the solid fraction collected from the separation means;
7) drying the combined solid fraction to a dry matter content of at least about 90 %;
8) wherein the total amount of spent water in the method calculated from the initial SBM starting material is 10 times the amount of SBM or less.

The invention in a second aspect relates to a processed, solid soya protein product derived from soya bean meal (SBM) obtainable by the method of the invention, which protein product comprises 65-75 % protein by weight of dry matter, has a protein to potassium weight ratio of at least 50:1 and a dry matter content of at least 90 %, which product comprises less than 0.2 % sodium, such as less than 0.01 % or less than 0.005 % or less than 0.001 % by weight, , and wherein at least 65 % by weight of the indigestible oligosaccharide content of the SBM wherefrom the protein is derived has been removed.

It is surprising that it is possible to provide soya protein products by a rather simple leaching process wherein the process features are selected in such a way that production costs are considerably reduced. Thus, the leaching process can be conducted without heating and/or by using tap water or water at room temperature. Furthermore, since the pH is adjusted with acid in the liquid fraction obtained after leaching, the amount of acid required to adjust the pH is reduced considerably in comparison with the amount required if the pH had been adjusted in the initial mixture; e.g. up to 50 % may be saved. Besides, the process is conducted by the use of only one leaching step and by addition of only one portion of water. Finally, the process can be adapted to recirculate water so that further water saving is achieved.

It is further surprising that it is possible to provide soya protein products having at the same time a rather high content of protein of a quality wherein a large amount of the indigestible oligosaccharides has been removed and an advantageous mineral profile in particular in relation to potassium. Thus, a large part of the potassium in the SBM wherefrom the protein is derived has been removed from the product, thereby leaving a product with a protein to potassium ratio of at least about 50:1. The potassium content in SBM varies depending of the source and the composition of the cultivation soil. Typical SBM from different cultivation soils varies from 1.8-2.7 %, see e.g. Batal et al, Poultry Science Association (2010): "Mineral composition of corn and soybean meal".

The product will also hold a beneficial high content of isoflavones.

Another benefit is that the product resulting from the method only contains minor amounts of water due to the low water content during the process, and accordingly, drying of the product can be performed at low costs due to the minor amount of water to be removed.

### Definitions

In the context of the current invention, the following terms are meant to comprise the following, unless defined elsewhere in the description.

The terms "about", "around", "approximately", or "∼" are meant to indicate e.g. the measuring uncertainty commonly experienced in the art, which can be in the order of magnitude of e.g. +/- 1, 2, 5 or even 10 %.

The term "comprising" is to be interpreted as specifying the presence of the stated part(s), step(s), feature(s), composition(s), chemical(s), or component(s), but does not exclude the presence of one or more additional parts, steps, features, compositions, chemicals or components. E.g., a composition comprising a chemical compound may thus comprise additional chemical compounds, etc.

The term indigestible is to be interpreted as not digestible by humans and monogastric/non-ruminant animals.

The term "at least about 65 % by weight of the original indigestible oligosaccharide content of soya bean meal wherefrom the protein is derived has been removed" is to be interpreted as specifying that the total content of indigestible oligosaccharides has been reduced by at least 65 % and also includes products wherein one type of oligosaccharide may be reduced to a larger extent than another type of oligosaccharide, and even wherein one type of oligosaccharide may be reduced only in a minor extent, as long as the total content of the oligosaccharides in the SBM wherefrom the protein is derived has been reduced as specified by at least 65 %.

The content of indigestible oligosaccharides in SBM varies with the source of SBM and the cultivation soil, and it is typically 6-9%.

### Biomass:

Comprises biological material produced by the photosynthesis and that can be used in industrial production.

In this context, biomass refers to plant matter in the form of grasses, cereals, seeds, nuts, beans and peas, etc., and mixtures thereof.

Furthermore a biomass comprising pulses is preferred due to the protein content and composition. They also contain carbohydrates comprising alpha-galactosides.

### Soya bean products:

Refers to plant matter in the form of soya bean products and mixtures thereof. The soya bean meal (SBM) can be from any soya bean source, such as from South or North America or Asia or Europe, and it can be of gene modified origin (GMO) or of non-gene modified origin (non-GMO).

They also contain carbohydrates comprising α-galactosides. In general the principal α-galactoside is stachyose.

### Otherwise disintegrated:

Means disintegrated by cooking and/or by maceration and/or acid or alkaline pressure-cooking or ultrasonic treatment.

### Oligosaccharides and polysaccharides:

An oligosaccharide is a saccharide oligomer containing a small number of component monomer sugars, also known as simple sugars. Typical examples are the trisaccharide raffinose (D-galactose-α1,6-D-glucose-α1,β2-D-fructose), the tetrasaccharide stachyose (D-galactose-α1,6-D-galactose-α1,6-D-glucose-α1,β2-D-fructose) and the pentasaccharide verbascose (D-galactose-α1,6-D-galactose-α1,6-D-galactose-α1,6-D-glucose-α1,β2-D-fructose).

Polysaccharides are saccharide polymers containing a large number of component monomer sugars, also known as complex carbohydrates. If the monomer sugars are of the same type the polysaccharide is called a homopolysaccharide, but when more than one type is present they are called heteropolysaccharides.

Examples include storage polysaccharides such as starch and structural polysaccharides such as cellulose and arabinoxylan.

### Processed food products:

Comprise dairy products, processed meat products, sweets, desserts, ice cream desserts, canned products; freeze dried meals, dressings, soups, convenience food, bread, cakes, etc.

### Processed feed products:

Comprise ready-to-use feed or feed ingredients for animals such as piglets, calves, poultry, furred animals, sheep, cats, dogs, fish and crustaceans, etc.

### Neutral pH:

Means a pH value about 6.5 to about 7.5.

### Detailed description of the invention

### The method for the manufacture of a processed, solid product in the first aspect of the invention:

The soya bean meal can be of any origin and it can be GMO or non-GMO.

The processed, solid soya protein product manufactured by the method of the invention comprises about 65-75 % protein by weight of dry matter, such as 65.5 %, 66 %, 66.5 %, 67 %, 67.5 %, 68 %, 68.5 %, 69 %, 69.5 %, 70 %, 71 %, 72 %, 73 %, 74 %, or 75 %.

The protein to potassium ratio in the product manufactured by the method of the invention is at least about 50:1, e.g. at least 55:1, at least 60:1, at least 65:1, at least 70:1, at least 72:1, at least 75:1, at least 80:1, at least 85:1, or even at least 90:1.

The dry matter percentage in the product manufactured by the method of the invention is at least about 90 %, such as at least 92 %, at least 94 %, at least 95 %, at least 96 %, at least 97 %, or at least 98 %.

The product manufactured by the method of the invention is substantially free of sodium, which means that it comprises less than about 0.2 %, such as less than 0.01 % or less than 0.005 % or less than 0.001 %.

The original soya bean indigestible oligosaccharides the content of which is removed in the product manufactured by the method of the invention are primarily raffinose, stachyose, and verbascose. At least about 65 % by weight of the original indigestible oligosaccharide content of the soy bean meal wherefrom the protein is derived has been removed, such as at least 70 %, 75 %, 80 %, 85 %, 90 or 95 %. The content of indigestible oligosaccharides in SBM varies with the source of SBM and the cultivation soil, and it is typically 6-9 %, of which at least 65 % has been removed in the processed, solid soya product of the invention. Thus, the content of the indigestible oligosaccharides in the product is typically 2-3 % or less.

The water content in the initial reaction mixture of the method for the manufacture of the processed, solid soya protein product does not exceed about 92 % by weight, which implies that the dry matter content in the mixture is at least 8 %. More specifically, it is between about 8 and 20 %, such as between 8 and 15 %, such as between 10 and 15 %, such as between 10 and 12 %.

The reaction time is 0.15-6 hours at a temperature of 5-65 °C. The temperature may e.g. vary from 7-60 °C, from 10-55 °C, from 15-50 °C, 20-45 °C, or from 30 to 40 °C; and at the same time the reaction time may vary e.g. from 10 minutes to 6 hours, from 20 minutes to 6 hours, from 1 to 6 hours, from 2 to 5 hours, from 2 to 4 hours, from 3 to 5 hours, or from 3 to 4 hours. The method can be conducted at low temperature by use of tap water or water at room temperature, thus production costs are reduced because heat application is not required. The leaching can be performed by stirring or similar means.

### Further embodiments of the manufacture method of the invention

In any of the embodiments of the method of the invention, the initial mixture comprising milled or flakes or otherwise disintegrated SBM may further comprise biological material from other biomass sources, such as grasses, cereals, seeds, nuts, beans or peas, or mixtures thereof, and/or in amounts up to e.g. 5%, 10%, 15%, 20 %, or 25 %.

In any of the embodiments of the method, the leaching step may be performed under anaerobic and/or aerobic conditions.

In any of the above embodiments of the method, the leached mixture is separated in a liquid fraction and a semi-solid fraction by any separation means, such as transfer through a cloth, sieve or screw press or by means of a decanter centrifuge.

In any embodiments of the method, pH in the liquid fraction, separated after leaching, is adjusted to about 3.5-5.5, e.g. at pH about 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, or 5.5. The pH can be adjusted by any organic or inorganic acid, such as formic acid, acetic acid, hydrochloride acid, sulfuric acid or phosphoric acid.

In any of the above embodiments of the method the liquid fraction can be conveyed through means for further separation of solids, such as decanter centrifuging, ultrafiltration and/or reverse osmosis, and the water is collected and recirculated to the initial leaching mixture and/or to a further leaching mixture.

De-watering of the solid fraction or the combined solid fractions, if applied, is conducted by squeezing or similar means. Drying to a dry matter of at least 90 % is performed by well-known means, such as by fluid bed dryer, ring dryer, KIX dehydrator or spin-flash dryer.

In any of the above embodiments of the method the leaching may be performed in any type of container with mixing/stirring and sufficient holding time, such as one or more non-vertical, interconnected paddle worm or continuous worm conveyers or a continuous stirred tank reactor with inlet means for the reaction mixture and additives and outlet means for the product, and it may include control means for rotation speed, temperature and pH. The continuous worm conveyer can be an optionally modified type of a single bladed or multi bladed screw or intersected screw conveyer designed to transport the reacting mixture and at the same time lifting the material so that it is transported and agitated without compacting it.

In any one of the above embodiments the leaching step can be performed as a batch, fed-batch, continuous process or counter flow process.

In any of the above embodiments of the method it may comprise a further step of de-watering the combined solid fractions to a dry matter content of at least 30 % before drying.

### The processed, solid products of the invention in the second aspect of the invention:

The soya bean meal can be of any origin and it can be GMO or non-GMO.

The processed, solid soya protein products of the invention comprises about 65-75 % protein by weight of dry matter, such as 65.5 %, 66 %, 66.5 %, 67 %, 67.5 %, 68 %, 68.5 %, 69 %, 69.5 %, 70 %, 71 %, 72 %, 73 %, 74 %, or 75 %.

The protein to potassium ratio in the processed, solid soya protein products of the invention is at least about 50:1, e.g. at least 55:1, at least 60:1, at least 65:1, at least 70:1, at least 72:1, at least 75:1, at least 80:1, at least 85:1, or even at least 90:1.

The dry matter percentage in the processed, solid soya protein products of the invention is at least about 90 %, such as at least 92 %, at least 94 %, at least 95 %, at least 96 %, at least 97 %, or at least 98 %.

The processed, solid soya protein products of the invention is substantially free of sodium, which means that it comprises less than about 0.2 %, such as less than 0.01 %, or less than 0.005 %, or less than 0.001 %.

The original soya bean indigestible oligosaccharides the content of which is removed in the processed, solid soya protein products of the invention are primarily raffinose, stachyose, and verbascose. At least about 65 % by weight of the original indigestible oligosaccharide content of soy bean meal wherefrom the protein is derived has been removed, such as at least 70 %, 75 %, 80 %, 85 %, 90, or 95 %. The content of indigestible oligosaccharides in SBM varies with the source of SBM and the cultivation soil, and it is typically 6-9 %, of which at least 65 % has been removed in the processed, solid soya product of the invention. Thus, the content of the indigestible oligosaccharides in the product is typically 2-3 % or less.

### The processed, solid product of the invention in its third aspect:

In its third aspect the invention related to a processed, solid soya protein product obtainable by a method according to the invention.

The soya bean meal can be of any origin and it can be GMO or non-GMO.

The processed, solid soya protein product of the invention comprises about 65-75 % protein by weight of dry matter, such as 65.5 %, 66 %, 66.5 %, 67 %, 67.5 %, 68 %, 68.5 %, 69 %, 69.5 %, 70 %, 71 %, 72 %, 73 %, 74 % or 75 %.

The protein to potassium ratio in the processed, solid soya protein products of the invention is at least about 50:1, e.g. at least 55:1, at least 60:1, at least 65:1, at least 70:1, at least 72:1, at least 75:1, at least 80:1, at least 85:1 or even at least 90:1.

The dry matter percentage in the processed, solid soya protein product of the invention is at least about 90 %, such as at least 92 %, at least 94 %, at least 95 %, at least 96 %, at least 97 % or at least 98 %.

The processed, solid soya protein product of the invention is substantially free of sodium, which means that it comprises less than about 0.2 %, such as less than 0.01 % or less than 0.005 % or less than 0.001 %.

The original soya bean indigestible oligosaccharides the content of which is removed in the processed, solid soya protein products of the invention are primarily raffinose, stachyose, and verbascose. At least about 65 % by weight of the original indigestible oligosaccharide content of soy bean meal wherefrom the protein is derived has been removed, such as at least 70 %, 75 %, 80 %, 85 %, 90 or 95 %. The content of indigestible oligosaccharides in SBM varies with the source of SBM and the cultivation soil, and it is typically 6-9 %, of which at least 65 % has been removed in the processed, solid soya product of the invention. Thus, the content of the indigestible oligosaccharides in the product is 2-3 % or less.

### Further embodiments of the products of the invention in its second and third aspect

In any of the embodiments of the processed, solid soya protein products of the invention, it may further comprise biological material from other biomass sources, such as grasses, cereals, seeds, nuts, beans or peas, or mixtures thereof, in amounts up to e.g. 5%, 10%, 15%, 20 %, or 25 %.

In any of the embodiments of the processed, solid soya protein products of the invention, at least about 35 % by weight of the original potassium content in the SBM wherefrom the protein is derived can be removed by the method of the invention. This would typically provide a processed, solid soya protein product which comprises about 1.5 % potassium or less measured on the dry matter.

The amount of potassium in the soya bean meal (SBM) depends on the cultivating soil and may typically vary from 1.8 to 2.7 %. In further embodiments of the processes, solid soya products of the invention, at least 40 %, at least 45 %, at least 50 %, at least 55 %, at least 58 %, at least 60 %, at least 65 %, at least 70 %, at least 75 %, or at least 80 % by weight of the original potassium may have been removed in the product. In such embodiments, or in alternative embodiments, the solid soya protein product typically comprises 1.5 % potassium or less than 1.5 %, e.g. 1.4 % or less, 1.3 % or less, 1.2 % or less, 1.1 % or less, 1.0 % or less, 0.9 % or less, 0.8 % or less, 0.7 % or less, 0.6 % or less, 0.5 % or less, 0.4 % or less, 0.3 % or less, 0.2 % or less, or 0.1 % or less.

In any of the above embodiments of the processed solid soya protein products may further comprise processed biological material from other biomass sources, such as grasses, cereals, seeds, nuts, beans or peas, or mixtures thereof, in amounts up to e.g. 5%, 10%, 15 %, 20%, 25%, 30% or 40%.

The amount of magnesium in soya bean meal (SBM) depends on the cultivating soil and may typically vary from 0.3 to 0.4 %. In any of the above embodiments at least about 30 % of the original magnesium content of the SBM source may have been removed in the processed, solid soya protein product, e.g. at least 35 %, at least 40 %, at least 45 %, or at least 50 % has been removed. In such embodiments, or in alternative embodiments, the processed, solid soya protein product measured on the dry matter content may comprise about 0.3 % magnesium or less, such as 0.25 % or less, e.g. 0.2 % or less, 0.15 % or less, or 0.1 % or less.

In any of the above embodiments of the method of the invention or the products of the invention the amounts of calcium and copper will be substantially unchanged in comparison with soy bean meal, thus the amount of calcium is about 0.2-0.5 %, e.g. about 0.3-0.4 %, and the amount of cupper is about 10-25 mg/kg, e.g. about 11, 12, 13, 14, 15, 16, 17, 18, 19, 20, 22m or 25 mg/kg, both depending of the cultivating soil for the soya bean.. The amount of calcium and copper in soya bean meal (SBM) depends on the cultivating soil and may typically vary from 13-25 mg/kg copper and 0.2-0.5 % calcium.

In any of the above embodiments of the products of the invention the amount of iron may be increased by at least about 10 %, e.g. at least 15 %, at least 20 %, at least 25 %, at least 30 %, at least 35 %, at least 40 %, at least 45 % or even at least 50 %. At the same time or in the alternative, the amount may be at least about 100 mg/kg, e.g. from about 100-200 mg/kg, e.g. 110, 120, 130, 140, 150, 160, 170, 180 or 190 mg/kg, depending of the cultivating soil for the soya bean. The amount of iron in soya bean meal (SBM) depends on the cultivating soil and may typically vary from 80-300 mg/kg.

In any of the above embodiments of the products of the invention the solid soya protein products comprises on a dry matter basis at least about 20 mg/kg zinc, e.g. at least 30 mg/kg, at least 35 mg/kg, at least 40 mg/kg, at least 45 mg/kg, at least 50 mg/kg or at least 60 mg/kg zinc.

In any of the above embodiments of the products of the invention the solid soya protein product comprises on a dry matter basis at least about 15 mg/kg manganese, e.g. at least 20 mg/kg, at least 25 mg/kg, at least 30 mg/kg, at least 35 mg/kg, at least 40 mg/kg or at least 50 mg/kg.

In any of the above embodiments of the products of the invention the solid soya protein product comprises on a dry matter basis about 0.1 % isoflavone, e.g. at least 0.12 %, at least 0.14 %, at least 0.15 %, at least 0.18 %, at least 0.2 %, at least 0.22 %, at least 0.25 %, at least 0.27 % or at least 0.30 %. Examples of isoflavones are Daidzein, Daidzin, Genistein, Genistin, Glycetein and Glycetin.

In any of the above embodiments of the products of the invention the water holding capacity may be low or high, depending of the intended final application. In one of such embodiments the capacity is low, e.g. less than 5 ml/g or less than 4 ml/g or less than 3 ml/ g or less than 2 ml/g or less than 1 ml/g.

The invention in its 4^{th} aspect also relates to the use of a processed solid soya product according to the invention in a processed food product or as an ingredient to be used in a feed product for animal consumption or as an ingredient in a nutritional supplement.

### Examples

### Materials and methods:

Soya bean meal (SBM) was obtained from different sources, including Non-GMO batch from Brazil (SBM395), GMO batch from Brazil (SBM466) and GMO batch from Paraguay (SBM478).

The content of indigestible oligosaccharides in the watery extracts of the biomass/Solid protein product can be analysed by thin layer chromatography on TLC silica gel 60 plates (Merck). The different components were quantified by comparison to standards of known concentration. Soluble carbohydrate was determined by the "Phenol-sulphuric assay" as described in: Carbohydrate analysis - A practical approach; IRL Press, Oxford. Ed. M.F. Chaplan & J.F. Kennedy, 1986 p 2.

### Example 1

### Leaching in a batch process at room temperature followed by adjustment of liquid fraction to pH 4.5 of SBM from 'SBM 395'

100 g of soya bean meal was suspended in water at room temperature to a total volume of 1000 ml to create a 10 % dry matter suspension at neutral pH, and the suspension was stirred for 30 minutes at room temperature.

The leached mixture was transferred to a cloth, and the liquid and solid fractions were collected separately. The solid fraction was kept for later mixture with the solid fraction below.

The pH in the liquid fraction was adjusted to about 4.5 with sulfuric acid, whereby a solid product comprising protein precipitates.

The fraction was centrifuged at 3000 x g for 10 minutes, and the solid fraction comprising the precipitated protein was collected and combined with the first solid fraction from the first separation, and the combined fractions were dried in a fluid bed dryer to a dry matter content of approx. 95 %.

The product was analysed for content of protein, minerals, trace elements and dry matter. The results are shown in table 1.

### Examples 2 and 3

### Leaching in a batch process at room temperature followed by adjustment of liquid fraction to pH 4.5 of a SBM from 'SBM466' or 'SBM478'

The process of example 1 was repeated with soy bean meal from other sources.

The product was analysed for content of protein, minerals, trace elements and dry matter.

The results are shown in table 1.

**Table 1**

| | **SBM - reference^{∗}** | **Example 1 M395** | **Example 2 M466** | **Example 3 M478** |
|---|---|---|---|---|
| Dry matter % | | 95.5 | 93.2 | 94.0 |
| Protein of dry matter % | 56 | 69.5 | 67.3 | 69.1 |
| Sodium (Na) % | | <0.01 | <0.01 | <0.01 |
| Potassium (K) % | 2.3 | 1.13 | 1.18 | 1.01 |
| Protein:K - ratio | 24 | 62 | 57 | 68 |
| Magnesium (Mg) % | 0.3-0.4 | 0.2 | 0.2 | 0.2 |
| Calcium (Ca) % | 0.2-0.5 | 0.3 | 0.3 | 0.4 |
| Copper (Cu) mg/kg | 13-25 | 9 | 9 | 11 |
| Iron (Fe) mg/kg | 80-300 | 123 | 108 | 141 |
| Zinc (Zn) mg/kg | 55 | 59 | 49 | 53 |
| Manganese (Mn) mg/kg | 30-60 | 32 | 32 | 62 |

| | | | | |
|---|---|---|---|---|
| ^{∗} The composition is the composition of a typical SBM | | | | |

From the results it can be seen that a product of the invention obtained after extraction at neutral pH followed by precipitation from the thus obtained separated liquid fraction has a protein content of 67-69 % by weight of dry matter and a modified mineral profile. In particular, the content of potassium is reduced to about half of the content in SBM. The protein to potassium weight ratio is from 62 - 93. Magnesium is reduced to about two thirds of the original content while calcium is unaffected. The content of zinc and manganese is only moderately affected by the leaching.

### Example 4

### Determination of removal of oligosaccharides in each of the protein products obtained in examples 1 to 3, wherein the protein is derived from SBM from three different sources [SBM395, SBM466, SBM478]

10 % watery slurries of each of the resulting products from example 1, 2, and 3 above, and a reference raw SBM, were made. The slurries were left with stirring for 30 minutes at room temperature. The liquid fraction in each slurry was collected by centrifugation 3000 x g for 10 minutes, and its oligosaccharide content was determined by TLC analysis. The results are shown in table 2.

**Table 2**

| **Source** | **Oligosaccharides** | | **Oligosaccharides removed** | **Stachyose/ raffinose** | | **Stachyose/ raffinose removed** |
|---|---|---|---|---|---|---|
| | Raw SBM % | Product % | | Raw SBM % | Product % | |
| **M395** | 13.9 | 4.1 | 70.5% | 7.5 | 1.8 | 76.0% |
| **M466** | 16.4 | 4.9 | 70.1% | 8.8 | 2.3 | 73.9% |
| **M478** | 15.5 | 4.0 | 74.2% | 8.3 | 1.9 | 77.1% |

These results indicate that the extraction of oligosaccharides is very effective.

### Comparative Example

### Leaching in a process according to WO 03/079806 of soya flakes and SBM; determination of removal of oligosaccharides

200 g defatted soya flakes were spread over aluminium trays and autoclaved at 110°C for 15 min. The flakes were soaked in 800 mL water (viz. in a ratio of 1:4 (w/v)) for 2h and drained through table cloth (by gravitation, no pressure applied) until no further draining occurred.

The extraction was repeated by soaking the wet flakes soaked in additional 600 mL water (viz. in a ratio of 1:3 (w/v)) for 2h and drained through table cloth until no further draining. Then the wet flakes were dried at 90°C in fluid bed dryer.

For comparison, the procedure was repeated for soybean meal M466.

The raw material and the dried products were analysed for protein, dry matter, minerals and oligosaccharides. The results are shown in tables 3-4.

**Table 3**

| | **Defatted soya flakes: Raw material** | **Defatted soya flakes: Product** | **SBM M466: Raw material** | **SBM M466: Product** |
|---|---|---|---|---|
| Dry matter % | | 80.7 | | 73.7 |
| Protein of dry matter % | 53.1 | 56.8 | 48.4 | 58.1 |
| Sodium (Na) % | <0.01 | 0.03 | <0.01 | 0.03 |
| Potassium (K) % | 2.4 | 2.0 | 2.4 | 1.7 |
| Protein:K- ratio | | 28 | | 34 |
| Magnesium (Mg) % | 0.3 | 0.3 | 0.3 | 0.3 |
| Calcium (Ca) % | 0.3 | 0.4 | 0.3 | 0.4 |
| Copper (Cu) mg/kg | 17.6 | 20.3 | 8.8 | 17.3 |
| Iron (Fe) mg/kg | 141 | 143 | 92 | 107 |
| Zinc (Zn) mg/kg | 52 | 60 | 51 | 67 |
| Manganese (Mn) mg/kg | 61 | 63 | 29 | 33 |

The protein analysis shows that the process illustrated in example 4 of WO03/079806 is not very effective in obtaining a product with high protein content. A product containing only 58 % was obtained, whereas the products which can be obtained according to the present process is 65-75 % as illustrated by the examples in table 1, where protein amounts of about 67-70 % were obtained.

The process of WO 03/079806 did not either produce a satisfactory reduction in potassium content; the reduction was only 18% with defatted soya flakes and 29% with SBM M466, and the final amount was 1.7-2 % of the dry matter content. Consequently, the protein to potassium ratio was 28:1-34:1.

**Table 4**

| **Source** | **Defatted soy flakes** | **Soybean meal M466** |
|---|---|---|
| Oligosaccharides in raw material % | 5.8 | 5.6 |
| Oligosaccharides in product % | 3.5 | 3.1 |
| Reduction of oligosaccharides % | 39.7 | 44.6 |

The analysis in table 4 shows that the process illustrated in example 4 of WO03079806 is not very effective in reducing the content of oligosaccharides in the starting, raw material. The process works slightly better with SBM than with defatted soya flakes, but it is not nearly as effective as the present process wherein at least 65 % of the oligosaccharides are removed, and the present examples have illustrated that up to 77 % can be removed (table 2).

For completeness, the protein content in the drain liquids was also determined, and the results are shown in table 5.

**Table 5**

| **Source** | **Defatted soy flakes** | **Soybean meal M466** |
|---|---|---|
| Protein of dry matter in first drain liquid % | 43.0 | 23.4 |
| Protein of dry matter in second drain liquid % | 45.8 | 28.8 |

Thus, it is clear that a large part of the protein in the defatted soya flakes and also in the SBM is dissolved by the soaking process leaving a solid product having a lower content of protein.

## Claims

1. A method for the manufacture of a processed, solid soya protein product derived from soya bean meal (SBM) which protein product comprises 65-75 % protein by weight of dry matter, has a protein to potassium weight ratio of at least 50:1 and a dry matter content of at least 90 %, which product comprises less than 0.2 % sodium, such as less than 0.01 % or less than 0.005 % or less than 0.001 % by weight, and wherein at least 65 % by weight of the indigestible oligosaccharide content of the SBM wherefrom the protein is derived has been removed; the method comprises the following steps:
1) providing an initial mixture comprising milled or flaked or otherwise disintegrated soya bean meal (SBM) and water;
2) leaching the initial mixture under conditions where the dry matter amount in the initial mixture is between 8 and 20 % by weight, for 0.15 to 6 hours at a temperature of 5 to 65°C and at neutral pH;
3) separating the leaching mixture in a liquid fraction and a first solid fraction;
4) adjusting the pH of the liquid fraction from the initial leaching mixture with acid to a value of 3.5 to 5.5;
5) conveying the acidified liquid fraction through separation means such as a decanter centrifuge or similar means thereby separating the waste liquid and collecting a further solid fraction;
6) combining the solid fraction from the initial leaching mixture with the solid fraction collected from the separation means;
7) drying the combined solid fraction to a dry matter content of at least 90 %;
8) wherein the total amount of spent water in the method calculated from the initial SBM starting material is 10 times the amount of SBM or less.

2. Method according to claim 1 wherein the initial mixture comprising milled or flaked or otherwise disintegrated SBM further comprises biological material from other biomass sources, such as grasses, cereals, seeds, nuts, beans or peas, or mixtures thereof.

3. Method according to any of the claims 1 and 2, wherein said leaching in step (2) is performed under anaerobic and/or aerobic conditions.

4. Method according to any of the claims 1 to 3, wherein said leaching is performed in one or more interconnected paddle worm or continuous worm conveyers or a continuous stirred tank reactor with inlet means for the SBM and the water and outlet means for the product, such as an optionally modified type of a single bladed or multi bladed screw or intersected screw conveyer designed to transport the reacting mixture and at the same time lifting the material so that it is transported and agitated without compacting it.

5. Method according to any one of the claims 1 to 4 wherein said leaching in step (2) is performed at a temperature of 5 to 50 °C, e.g. 10 to 40 °C, 20 to 35 °C, or 20 to 30 °C, and/or wherein said leaching step (4) is performed at pH of 3.5 to 5, e.g. 3.5 to 4.5, or 3.8 to 4.0.

6. A processed, solid soya protein product derived from soya bean meal (SBM) obtainable by the method of any one of claims 1-5, which protein product comprises 65-75 % protein by weight of dry matter, has a protein to potassium weight ratio of at least 50:1 and a dry matter content of at least 90 %, which product comprises less than 0.2 % sodium, such as less than 0.01 % or less than 0.005 % or less than 0.001 % by weight, and wherein at least 65 % by weight of the indigestible oligosaccharide content of the SBM wherefrom the protein is derived has been removed.

7. A processed, solid soya protein product according to claim 6 further comprising processed biological material from other biomass sources, such as grasses, cereals, seeds, nuts, beans or peas, or mixtures thereof.

8. A processed solid soya protein product according to any of the claims 6 to 7, wherein the protein to potassium ratio is at least 55:1, e.g. at least 60:1, at least 70:1, at least 75:1, at least 80:1, or at least 90:1.

9. A processed, solid soya protein product according to any of the claims 6 to 8, which product measured on the dry matter content comprises 1.5 % potassium or less, such as 1.4 % or less, 1.3 % or less, 1.2 % or less, 1.1 % or less, 1.0 % or less, 0.9 % or less, 0.8 % or less, 0.7 % or less, 0.6 % or less, 0.5 % or less, 0.4 % or less, 0.3 % or less, 0.2 % or less, 0.1 % or less.

10. A processed, solid soya protein product according to any of the claims 6 to 9, which product measured on the dry matter content comprises 0.3 % magnesium or less, such as 0.25 % or less, e.g. 0.2 % or less, 0.15 % or less, or 0.1 % or less.

11. A processed, solid soya protein product according to any of the claims 6 to 10, wherein the content of indigestible oligosaccharides measured on the dry matter content is 3.0 % or less, such as 2.5 % or less, e.g. 2.0 % or less, 1.5 % or less, or 1.0 % or less.

12. A processed, solid soya protein product according to any of the claims 6 to 11, wherein
- at least 35 % by weight of the original potassium content of the SBM wherefrom the protein is derived has been removed; and/or
- at least 30 % by weight of the original magnesium content of the SBM wherefrom the protein is derived has been removed.

13. A processed, solid soya protein product according to any of the claims 6 to 12, wherein
- the amount of calcium is 0.2-0.5 %, e.g. 0.3-0.4 %, and
- the amount of copper is 10-25 mg/kg, e.g. 11, 12, 13, 14, 15, 16, 17, 18, 19, 20, 22, or 25 mg/kg.

14. A processed, solid soya protein product according to any of the claims 6 to 13, which product measured on the dry matter content comprises
- at least 20 mg/kg (ppm) zinc; and/or
- at least 15 mg/kg (ppm) manganese.

15. A processed solid soya protein product according to any of the claims 6 to 14, which product measured on the dry matter content comprises at least 0.1 % isoflavones, e.g. at least 0.12 %, at least 0.14 %, at least 0.15 %, at least 0.18 %, at least 0.2 %, at least 0.22 %, at least 0.25 %, at least 0.27 %, or at least 0.30 % isoflavones.

16. A processed solid soya protein product according to any of the claims 6 to 15, wherein the amount of iron is increased by at least 5 % by weight in comparison with the content of SBM wherefrom the protein is derived, and/or wherein the product measured on the dry matter content comprises at least 110 mg/kg iron.

17. A processed, solid soya protein product derived according to any of the claims 6 to 16, obtainable by a method according to any of the claims 1 to 5.

18. A processed solid soya protein product according to any of the claims 6 to 17, wherein the water holding capacity is less than 10 mL/g, less than 5 mL/g, less than 4 mL/g, less than 3 mL/ g, less than 2 mL/g, or less than 1 mL/g.

19. Use of a processed solid soya protein product according to any one of the claims 6 to 18 in a processed food product or as an ingredient to be used in a feed product for animal consumption or as an ingredient in a nutritional supplement.

## Patentansprüche

1. Verfahren zur Herstellung eines verarbeiteten, festen Sojaproteinprodukts, das von Sojabohnenmehl (SBM) abgeleitet ist, welches Proteinprodukt 65-75 Gew.-% Trockenmasse umfasst, ein Verhältnis von Protein zu Kalium von mindestens 50:1 aufweist und einen Trockenmassegehalt von mindestens 90%, welches Produkt weniger als 0,2% Natrium, wie etwa weniger als 0,01 % oder weniger als 0,005% oder weniger als 0,001 Gew.-% umfasst, und wobei mindestens 65 Gew.-% des unverdaulichen Oligosaccharidgehalts des SBM, von dem das Protein abgeleitet ist, entfernt worden sind; welches Verfahren die folgenden Schritte umfasst:
1) Bereitstellen einer Ausgangsmischung, die gemahlenes oder flockenförmiges oder anderweitig desintegriertes Sojabohnenmehl (SBM) und Wasser umfasst;
2) Auslaugen der Ausgangsmischung unter Bedingungen, bei denen die Trockenmassenmenge in der Ausgangsmischung zwischen 8 und 20 Gew.-% liegt, über 0,15 bis 6 Stunden bei einer Temperatur von 5 bis 65°C und bei neutralem pH-Wert;
3) Trennen des Auslaugungsgemischs in eine flüssige Fraktion und eine erste feste Fraktion;
4) Einstellen des pH-Werts der flüssigen Fraktion aus der anfänglichen Auslaugungsmischung mit Säure auf einen Wert von 3,5 bis 5,5;
5) Fördern der angesäuerten flüssigen Fraktion durch ein Trennmittel, wie eine Dekanterzentrifuge oder ähnliche Mittel, wodurch die Abfallflüssigkeit getrennt wird und eine weitere feste Fraktion gesammelt wird;
6) Kombinieren der festen Fraktion aus der anfänglichen Auslaugungsmischung mit der von dem Trennmittel gesammelten festen Fraktion;
7) Trocknen der kombinierten festen Fraktion auf einen Trockenmassegehalt von mindestens 90%;
8) wobei die Gesamtmenge an verbrauchtem Wasser in dem Verfahren, berechnet aus dem anfänglichen SBM-Ausgangsmaterial, das 10-fache der Menge an SBM oder weniger beträgt.

2. Verfahren nach Anspruch 1, wobei die anfängliche Mischung, die gemahlenes oder flockeförmiges oder anderweitig desintegriertes SBM umfasst, ferner biologisches Material aus anderen Biomassequellen, wie Gräsern, Getreide, Samen, Nüssen, Bohnen oder Erbsen oder Mischungen davon, umfasst.

3. Verfahren nach einem der Ansprüche 1 und 2, wobei das Auslaugen in Schritt (2) unter anaeroben und/oder aeroben Bedingungen durchgeführt wird.

4. Verfahren nach einem der Ansprüche 1 bis 3, wobei das Auslaugen in einem oder mehreren miteinander verbundenen Paddelschnecken- oder kontinuierlichen Schneckenförderern oder einem kontinuierlichen Rührkesselreaktor mit Einlassmitteln für das SBM und das Wasser und Auslassmitteln für das Produkt durchgeführt wird, wie etwa eine gegebenenfalls modifizierte Art von Einschneiden- oder Mehrschneiden-Schneckenförderer oder durchschnittenem Schneckenförderer, der dazu ausgestaltet ist, das Reaktionsgemisch zu fördern und gleichzeitig das Material anzuheben, so dass es gefördert und gerührt wird, ohne dass es verdichtet wird.

5. Verfahren nach einem der Ansprüche 1 bis 4, wobei das Auslaugen in Schritt (2) bei einer Temperatur von 5 bis 50°C, z.B. 10 bis 40°C, 20 bis 35°C oder 20 bis 30°C durchgeführt wird, und/oder wobei der Auslaugungsschritt (4) bei einem pH-Wert von 3,5 bis 5, z.B. 3,5 bis 4,5 oder 3,8 bis 4,0 durchgeführt wird.

6. Verarbeitetes, festes Sojaproteinprodukt, das von Sojabohnenmehl (SBM) abgeleitet ist, das durch das Verfahren nach einem der Ansprüche 1-5 erhältlich ist, welches Proteinprodukt 65-75 Gew.-% Trockenmasse umfasst, ein Verhältnis von Protein zu Kalium von mindestens 50:1 aufweist und einen Trockenmassegehalt von mindestens 90%, welches Produkt weniger als 0,2% Natrium, wie etwa weniger als 0,01 % oder weniger als 0,005% oder weniger als 0,001 Gew.-% umfasst, und wobei mindestens 65 Gew.-% des unverdaulichen Oligosaccharidgehalts des SBM, von dem das Protein abgeleitet ist, entfernt worden sind.

7. Verarbeitetes, festes Sojaproteinprodukt nach Anspruch 6, ferner umfassend verarbeitetes biologisches Material aus anderen Biomassequellen, wie Gräsern, Getreide, Samen, Nüssen, Bohnen oder Erbsen oder Mischungen davon.

8. Verarbeitetes festes Sojaproteinprodukt nach einem der Ansprüche 6 bis 7, wobei das Verhältnis von Protein zu Kalium mindestens 55:1, z.B. mindestens 60:1, mindestens 70:1, mindestens 75:1, mindestens 80:1 oder mindestens 90:1 beträgt.

9. Verarbeitetes festes Sojaproteinprodukt nach einem der Ansprüche 6 bis 8, welches Produkt, gemessen am Trockenmassegehalt, 1,5% Kalium oder weniger, wie etwa 1,4% oder weniger, 1,3% oder weniger, 1,2% oder weniger, 1,1% oder weniger, 1,0% oder weniger, 0,9% oder weniger, 0,8% oder weniger, 0,7% oder weniger, 0,6% oder weniger, 0,5% oder weniger, 0,4% oder weniger, 0,3% oder weniger, 0,2% oder weniger, 0,1% oder weniger umfasst.

10. Verarbeitetes, festes Sojaproteinprodukt nach einem der Ansprüche 6 bis 9, welches Produkt, gemessen am Trockenmassegehalt, 0,3% Magnesium oder weniger, wie etwa 0,25% oder weniger, z.B. 0,2% oder weniger, 0,15% oder weniger oder 0,1 % oder weniger umfasst.

11. Verarbeitetes festes Sojaproteinprodukt nach einem der Ansprüche 6 bis 10, wobei der Gehalt an unverdaulichen Oligosacchariden, gemessen am Trockenmassegehalt 3,0% oder weniger, wie etwa 2,5% oder weniger, z.B. 2,0% oder weniger, 1,5% oder weniger, oder 1,0% oder weniger beträgt.

12. Verarbeitetes, festes Sojaproteinprodukt nach einem der Ansprüche 6 bis 11, wobei
- mindestens 35 Gew.-% des ursprünglichen Kaliumgehalts des SBM, von dem das Protein abgeleitet ist, entfernt wurden; und/oder
- mindestens 30 Gew.-% des ursprünglichen Magnesiumgehalts des SBM, von dem das Protein abgeleitet ist, entfernt wurden.

13. Verarbeitetes, festes Sojaproteinprodukt nach einem der Ansprüche 6 bis 12, wobei
- die Menge an Kalzium 0,2-0,5 %, z.B. 0,3-0,4 % beträgt und
- die Menge ab Kupfer 10-25 mg/kg, z.B. 11, 12, 13, 14, 15, 16, 17, 18, 19, 20, 22, oder 25 mg/kg beträgt.

14. Verarbeitetes, festes Sojaproteinprodukt nach einem der Ansprüche 6 bis 13, welches Produkt, gemessen am Trockenmassegehalt,
- mindestens 20 mg/kg (ppm) Zink; und/oder
- mindestens 15 mg/kg (ppm) Mangan umfasst.

15. Verarbeitetes festes Sojaproteinprodukt nach einem der Ansprüche 6 bis 14, welches Produkt, gemessen am Trockenmassegehalt, mindestens 0,1% Isoflavone, z. B. mindestens 0,12%, mindestens 0,14%, mindestens 0,15%, mindestens 0,18%, mindestens 0,2%, mindestens 0,22%, mindestens 0,25%, mindestens 0,27% oder mindestens 0,30% Isoflavone umfasst.

16. Verarbeitetes festes Sojaproteinprodukt nach einem der Ansprüche 6 bis 15, wobei die Menge an Eisen um mindestens 5 Gew.-% im Vergleich zu dem Gehalt an SBM, von dem das Protein abgeleitet ist, erhöht wird, und/oder wobei das Produkt, gemessen am Trockenmassegehalt, mindestens 110 mg/kg Eisen umfasst.

17. Verarbeitetes, festes Sojaproteinprodukt, das nach einem der Ansprüche 6 bis 16 abgeleitet ist, erhältlich durch ein Verfahren nach einem der Ansprüche 1 bis 5.

18. Verarbeitetes festes Sojaproteinprodukt nach einem der Ansprüche 6 bis 17, wobei die Wasserhaltekapazität weniger als 10 ml/g, weniger als 5 ml/g, weniger als 4 ml/g, weniger als 3 ml/g, weniger als 2 ml/g oder weniger als 1 ml/g beträgt.

19. Verwendung eines verarbeiteten festen Sojaproteinprodukts nach einem der Ansprüche 6 bis 18 in einem verarbeiteten Nahrungsmittelprodukt oder als Bestandteil zur Verwendung in einem Futterprodukt für den Tierverbrauch oder als Bestandteil in einem Nahrungsergänzungsmittel.

## Revendications

1. Procédé de fabrication d'un produit de protéine de soja solide traité dérivé du tourteau de soja (SBM), ledit produit de protéine comprenant 65-75% de protéine en poids de matière sèche, présentant un rapport protéine-potassium d'au moins 50:1 et une teneur en matière sèche d'au moins 90%, ledit produit comprenant moins de 0,2% de sodium, tel que moins de 0,01 % ou moins de 0,005% ou moins de 0,001 % en poids, et au moins 65% en poids de la teneur en oligosaccharide indigestible du SBM à partir duquel la protéine étant dérivée a été éliminée ; le procédé comprenant les étapes suivantes consistant à
1) fournir un mélange initial comprenant du tourteau de soja (SBM) broyée ou en flocons ou autrement désintégrée et de l'eau ;
2) lixivier le mélange initial dans des conditions où la quantité de matière sèche dans le mélange initial est comprise entre 8 et 20% en poids, pendant 0,15 à 6 heures à une température de 5 à 65°C et à un pH neutre ;
3) séparer le mélange de lixiviation dans une fraction liquide et une première fraction solide ;
4) ajuster le pH de la fraction liquide à partir du mélange de lixiviation initial avec de l'acide à une valeur de 3,5 à 5,5 ;
5) transporter la fraction liquide acidifiée à travers des moyens de séparation tels qu'une centrifugeuse de décantation ou des moyens similaires, ce qui permet de séparer les déchets liquides et de collecter une autre fraction solide ;
6) combiner la fraction solide du mélange de lixiviation initial avec la fraction solide collectée à partir des moyens de séparation ;
7) sécher la fraction solide combinée à une teneur en matière sèche d'au moins 90% ;
8) dans lequel la quantité totale d'eau usée dans le procédé calculée à partir du matériau de départ de SBM initial est 10 fois la quantité de SBM ou moins.

2. Procédé selon la revendication 1, dans lequel le mélange initial comprenant du SBM broyé ou en flocons ou autrement désintégré comprend en outre une matière biologique provenant d'autres sources de biomasse, telles que des herbes, des céréales, des graines, des noix, des haricots ou des pois, ou des mélanges de ceux-ci.

3. Procédé selon l'une quelconque des revendications 1 et 2, dans lequel ladite lixiviation dans l'étape (2) est effectuée dans des conditions anaérobies et / ou aérobies.

4. Procédé selon l'une quelconque des revendications 1 à 3, dans lequel ladite lixiviation est effectuée dans un ou plusieurs transporteurs à vis sans fin ou à vis sans fin reliés entre eux ou un réacteur à cuve agitée en continu avec des moyens d'entrée pour le SBM et de l'eau et des moyens de sortie pour le produit, tel qu'un type éventuellement modifié d'un transporteur à vis d'une seule ou de plusieurs lames ou à vis intersectée destiné à transporter le mélange de réaction et en même temps, à soulever le matériau afin qu'il soit transporté et agité sans compactage.

5. Procédé selon l'une quelconque des revendications 1 à 4, dans lequel ladite lixiviation dans l'étape (2) est effectuée à une température de 5 à 50°C, par exemple de 10 à 40°C, de 20 à 35°C, ou de 20 à 30°C, et / ou dans lequel ladite étape de lixiviation (4) est effectuée à un pH de 3,5 à 5, par exemple 3,5 à 4,5, ou 3,8 à 4,0.

6. Produit de protéine de soja solide traité dérivé du tourteau de soja (SBM) pouvant être obtenu par le procédé selon l'une quelconque des revendications 1 à 5, ledit produit de protéine comprenant 65-75% de protéine en poids de matière sèche, présentant un rapport protéine-potassium d'au moins 50:1 et une teneur en matière sèche d'au moins 90%, ledit produit comprenant moins de 0,2% de sodium, tel que moins de 0,01% ou moins de 0,005% ou moins de 0,001% en poids, et au moins 65% en poids de la teneur en oligosaccharide indigestible du SBM à partir duquel la protéine étant dérivée a été éliminée.

7. Produit de protéine de soja solide traité selon la revendication 6, comprenant en outre une matière biologique traitée provenant d'autres sources de biomasse, telles que des herbes, des céréales, des graines, des noix, des haricots ou des pois, ou des mélanges de ceux-ci.

8. Produit de protéine de soja solide traité selon l'une quelconque des revendications 6 à 7, dans lequel le rapport protéine-potassium est d'au moins 55:1, par exemple d'au moins 60:1, d'au moins 70:1, d'au moins 75:1, d'au moins 80:1, ou d'au moins 90:1.

9. Produit de protéine de soja solide traité selon l'une quelconque des revendications 6 à 8, lequel produit mesuré sur la teneur en matière sèche comprend 1,5% de potassium ou moins, tel que 1,4% ou moins, 1,3% ou moins, 1,2% ou moins, 1,1% ou moins, 1,0% ou moins, 0,9% ou moins, 0,8% ou moins, 0,7% ou moins, 0,6% ou moins, 0,5% ou moins, 0,4% ou moins, 0,3% ou moins, 0,2% ou moins, 0,1% ou moins.

10. Produit de protéine de soja solide traité selon l'une quelconque des revendications 6 à 9, lequel produit mesuré sur la teneur en matière sèche comprend 0,3% de magnésium ou moins, tel que 0,25% ou moins, par exemple 0,2% ou moins, 0,15% ou moins, ou 0,1% ou moins.

11. Produit de protéine de soja solide traité selon l'une quelconque des revendications 6 à 10, dans lequel la teneur en oligosaccharides indigestibles mesurée sur la teneur en matière sèche est inférieure ou égale à 3,0%, telle que 2,5% ou moins, par exemple 2,0% ou moins, 1,5% ou moins, ou 1,0% ou moins.

12. Produit de protéine de soja solide traité selon l'une quelconque des revendications 6 à 11, dans lequel
- au moins 35% en poids du contenu de potassium d'origine du SBM à partir duquel la protéine est dérivée a été éliminée ; et / ou
- au moins 30% en poids du contenu de magnésium d'origine du SBM à partir duquel la protéine est dérivée a été éliminée.

13. Produit de protéine de soja solide traité selon l'une quelconque des revendications 6 à 12, dans lequel
- la quantité de calcium est de 0,2 à 0,5%, par exemple de 0,3 à 0,4%, et
- la quantité de cuivre est de 10-25 mg/kg, par exemple 11, 12, 13, 14, 15, 16, 17, 18, 19, 20, 22 ou 25 mg/kg.

14. Produit de protéine de soja solide traité selon l'une quelconque des revendications 6 à 13, lequel produit mesuré sur la teneur en matière sèche comprend
- au moins 20 mg/kg (ppm) de zinc ; et / ou
- au moins 15 mg/kg (ppm) de manganèse.

15. Produit de protéine de soja solide traité selon l'une quelconque des revendications 6 à 14, lequel produit mesuré sur la teneur en matière sèche comprend au moins 0,1% d'isoflavones, par exemple au moins 0,12%, au moins 0,14%, au moins 0,15%, au moins 0,18%, au moins 0,2%, au moins 0,22%, au moins 0,25%, au moins 0,27%, ou au moins 0,30% d'isoflavones.

16. Produit de protéine de soja solide traité selon l'une quelconque des revendications 6 à 15, dans lequel la quantité de fer est augmentée d'au moins 5% en poids par rapport au contenu de SBM à partir duquel la protéine est dérivée, et / ou dans lequel le produit mesuré sur la teneur en matière sèche comprend au moins 110 mg/kg de fer.

17. Produit de protéine de soja solide traité dérivé selon l'une quelconque des revendications 6 à 16, pouvant être obtenu par un procédé selon l'une quelconque des revendications 1 à 5.

18. Produit de protéine de soja solide traité selon l'une quelconque des revendications 6 à 17, dans lequel la capacité de rétention d'eau est inférieure à 10 mL/g, inférieure à 5 mL/g, inférieure à 4 mL/g, inférieure à 3 mL/g, inférieure à 2 mL/g, ou inférieure à 1 mL/g

19. Utilisation d'un produit de protéine de soja solide traité selon l'une quelconque des revendications 6 à 18 dans un produit alimentaire transformé ou en tant qu'ingrédient à utiliser dans un produit alimentaire pour la consommation animale ou en tant qu'ingrédient dans un supplément nutritionnel.
